(19) **Europäisches Patentamt / European Patent Office / Office européen des brevets**

(11) **EP 4 108 440 A1**

(12) **EUROPEAN PATENT APPLICATION**
published in accordance with Art. 153(4) EPC

(43) Date of publication:
**28.12.2022 Bulletin 2022/52**

(21) Application number: **21757098.5**

(22) Date of filing: **16.02.2021**

(51) International Patent Classification (IPC):
**B29K 101/12** (2006.01) **B29K 105/12** (2006.01)
**C08K 5/07** (2006.01) **C08K 5/1545** (2006.01)
**C08L 1/02** (2006.01) **C08L 23/00** (2006.01)
**C08L 67/02** (2006.01) **C08L 93/00** (2006.01)
**C08L 101/00** (2006.01) **B29C 70/12** (2006.01)
**B29C 70/28** (2006.01)

(52) Cooperative Patent Classification (CPC):
(C-Sets available)
**C08L 1/02; B29C 70/12; B29C 70/28; C08K 5/07;**
**C08K 5/1545; C08L 23/12; C08L 67/02;**
**C08L 93/00; C08L 99/00; C08L 101/00** (Cont.)

(86) International application number:
**PCT/JP2021/005741**

(87) International publication number:
**WO 2021/166914 (26.08.2021 Gazette 2021/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **17.02.2020 JP 2020024327**

(71) Applicant: **Furukawa Electric Co., Ltd.**
**Tokyo 100-8322 (JP)**

(72) Inventors:
• **HARA, Hidekazu**
**Tokyo 100-8322 (JP)**
• **KIM, Jae Kyung**
**Tokyo 100-8322 (JP)**

• **SAKATO, Jiro**
**Tokyo 100-8322 (JP)**
• **HIROISHI, Jirou**
**Tokyo 100-8322 (JP)**
• **SUZUKI, Toshihiro**
**Tokyo 100-8322 (JP)**
• **TAZUKE, Masami**
**Tokyo 100-8322 (JP)**
• **IKEUCHI, Masato**
**Tokyo 100-8322 (JP)**
• **YAMAZAKI, Kyosuke**
**Tokyo 100-8322 (JP)**
• **YABUNAKA, Kentaro**
**Tokyo 100-8322 (JP)**

(74) Representative: **Forstmeyer, Dietmar et al**
**Boeters & Lieck**
**Oberanger 32**
**80331 München (DE)**

(54) **RESIN COMPOSITE MATERIAL AND RESIN MOLDED BODY**

(57) A resin composite material containing a thermoplastic resin, a powder containing a polysaccharide, the powder being dispersed in the thermoplastic resin, and a monosaccharide; and a resin formed body obtained using the same.

**(Cont. next page)**

(52) Cooperative Patent Classification (CPC): (Cont.)

C-Sets
**C08L 1/02, C08L 23/06, C08L 23/12;**
**C08L 23/12, C08L 1/02, C08L 23/06;**
**C08L 99/00, C08L 1/02, C08L 23/06, C08L 23/12**

# EP 4 108 440 A1

**Description**

FIELD OF THE INVENTION

The present invention relates to a resin composite material and a resin formed body.

BACKGROUND OF THE INVENTION

Thermoplastic resins are excellent in formability, and formed bodies formed using thermoplastic resins are excellent in mechanical properties, electrical characteristics, chemical resistance, and the like. Therefore, the thermoplastic resins have been widely used as a material for resin formed bodies.

Thermoplastic resin formed bodies are formed using a virgin material, and thermoplastic resins formed bodies using a regenerated resin are known. In addition, a technique of obtaining a thermoplastic resin composite material using a used material containing polyolefin, such as laminated paper or a beverage pack are also reported. When a material containing paper is used, cellulose fibers derived from paper act as reinforcing fibers for the resin in a composite material to be obtained, and can enhance the mechanical properties of a thermoplastic resin formed body to be obtained using this composite material to a desired level.

As a part of a technique for recycling such a used material into a resin composite material, use of a coffee residue (waste) has been studied. The coffee residue is a residue after extracting coffee from a coffee powder. For example, Patent Literature 1 proposes a resin composite material using a coffee residue and a method for producing the same.

CITATION LIST

PATENT LITERATURES

Patent Literature 1: JP-A-2010-173169 ("JP-A" means an unexamined published Japanese patent application)

SUMMARY OF THE INVENTION

TECHNICAL PROBLEM

In recent years, a portion capsule coffee, in which powdered coffee are housed in a plastic capsule, has been sold. The market thereof has been expanding due to the fact that a fresh flavor can be easily enjoyed. The coffee residue after extraction of such a portion capsule coffee is still encapsulated in the capsule, making it difficult to recycle the coffee residue. In addition to coffee, portion capsule beverages using black tea, green tea, or the like have been also sold, and it is difficult to recycle these extraction residues as well.

A powder which is an extraction residue of coffee, black tea, green tea, or the like (the same applies to a powder of coffee, black tea, green tea, or the like before extraction) contains a polysaccharide as a component thereof. Therefore, when a resin composite material is prepared by mixing the powder with a thermoplastic resin, a fiber reinforcing effect of the resin provided by the polysaccharide is expected.

However, as a result of studies on a resin composite material using a powder containing a polysaccharide as described above, the present inventors have found that inclusion of these powders may disadvantageously act on formability and impact resistance characteristics of the resin composite material, and there is a need for improvement.

The present invention provides a resin composite material that is excellent in formability while containing a powder containing a polysaccharide in a thermoplastic resin and is also excellent in mechanical properties such as impact resistance characteristics, and a resin formed body using the same.

SOLUTION TO PROBLEM

In the present invention, the above problems were solved by the following means:

[1] A resin composite material, containing:

a thermoplastic resin;
a powder containing a polysaccharide, the powder being dispersed in the thermoplastic resin; and
a monosaccharide.

[2] The resin composite material described in the above item [1], wherein the powder containing a polysaccharide contains an organic residue.

[3] The resin composite material described in the above item [1], wherein the powder containing a polysaccharide contains a coffee residue and/or a coffee powder.

[4] The resin composite material described in any one of the above items [1] to [3], wherein the thermoplastic resin contains a polyolefin resin.

[5] The resin composite material described in the above item [4], wherein the polyolefin resin contains an acid-modified polyolefin resin.

[6] The resin composite material described in the above item [4] or [5], containing resin particles containing a resin different from the polyolefin resin, wherein a melting point of the resin different from the polyolefin resin is 10°C or more higher than a melting point of the polyolefin resin; and wherein a maximum diameter of the resin particles is 10 $\mu$m or more.

[7] The resin composite material described in [6], wherein the resin particles contain polyethylene terephthalate.

[8] The resin composite material described in any one of the above items [1] to [7], containing cellulose fibers having a fiber length of 0.3 mm or more.

[9] The resin composite material described in any one of the above items [1] to [8], which is used for a material or a constituent member for civil engineering, a building material, furniture, or an automobile.

[10] A resin formed body, which is obtainable by using the resin composite material described in any one of the above items [1] to [8].

[11] The resin formed body described in [10], which is used as a material or a constituent member for civil engineering, a building material, furniture, or an automobile.

ADVANTAGEOUS EFFECTS OF INVENTION

The resin composite material of the present invention is excellent in formability while containing a powder containing a polysaccharide in a thermoplastic resin and is also excellent in mechanical properties such as impact resistance. The formed body of the present invention is excellent in formability in the production thereof while containing a powder containing a polysaccharide in a thermoplastic resin and is also excellent in mechanical properties such as impact resistance.

The above-described and other features and advantages of the present invention will appear more fully from the following description.

DESCRIPTION OF EMBODIMENTS

Preferable embodiments of the present invention will be described.

[Resin composite material]

The resin composite material of the present invention (hereinafter, also simply referred to as "composite material of the present invention") contains a thermoplastic resin, a powder containing a polysaccharide and being dispersed in the thermoplastic resin, and a monosaccharide. That is, the resin composite material of the present invention is formed by dispersing a powder containing a polysaccharide in a thermoplastic resin, and further contains a monosaccharide.

In the present invention, the term "resin composite material" means a material in which components constituting the composite material are substantially uniformly mixed and integrated. A part of the components constituting the resin composite material may form aggregates. These aggregates are almost uniformly dispersed in the matrix resin as a whole composite material.

The powder containing a polysaccharide can be used without limitation as long as it contains a polysaccharide as a component thereof. Specific examples thereof include powders of coffee beans, tea leaves, beans, and cereals (including rice, wheat, corn, buckwheat, and the like), and an organic residue (such as coffee residues, tea leaves, and the like) after extracting beverages and the like therefrom. In the present invention, the term "vegetable powder" is used in the meaning including both the powder and the organic residue. That is, unless otherwise specified, the "vegetable powder" is the powder before extraction or the like (before use) and/or the organic residue after extraction (after use). The term "vegetable" means containing a plant-derived component (preferably the main component is a plant-derived component, more preferably 50 mass% or more of the plant-derived component is contained, and even more preferably 80 mass% or more of the plant-derived component is contained). The term "organic" means containing an organic substance (the main component is preferably an organic substance, more preferably 50 mass% or more of the organic substance is contained, and even more preferably 80 mass% or more of the organic substance is contained). Examples of the form of the powder include a powder form, a fiber form, and a plate form.

Examples of the polysaccharide include arabinogalactan, galactomannan, and cellulose. The powder may contain at least one kind of polysaccharide. These polysaccharides are contained as components of the coffee beans and the like.

The powder containing a polysaccharide is preferably the organic residue, and more preferably a coffee residue and/or a coffee powder.

As a preferred embodiment of the present invention, a case of using a coffee residue and/or a coffee powder as a powder containing a polysaccharide will be described as an example. The description described below (the maximum diameter of the coffee residue and/or the coffee powder, the content of the coffee residue and/or the coffee powder in the composite material, a monosaccharide to be used in combination, a thermoplastic resin to be used in combination, combined use with cellulose fibers and/or resin particles which are additionally used, a method for producing the composite material, conditions for producing the composite material, and the like) also applies to a case of using a powder and/or an organic residue other than the "coffee powder and coffee residue" unless otherwise specified.

As the coffee residue and/or the coffee powder, a residue after coffee is extracted from the coffee powder can be used without particular limitation, and waste of unused (unextracted) coffee powder and the like can be used or included. Examples of the coffee powder include a pulverized material of coffee beans, specifically a pulverized material of roasted coffee beans. From the viewpoint of effective use of resources, preferably, the powder containing a polysaccharide contains a coffee residue, and more preferably, the powder containing a polysaccharide is a coffee residue. The coffee beans contain polysaccharides such as arabinogalactan, galactomannan, and cellulose.

When the coffee residue and/or the coffee powder is used, the maximum diameter of the coffee residue and/or coffee powder to be used is not particularly limited. Examples thereof include those having a maximum diameter of 0.1 $\mu$m to 1 mm. When the size of the coffee residue and/or the coffee powder is within the above range, a composite material excellent in formability and appearance quality can be obtained, which is preferable. From this point of view, the lower limit of the maximum diameter of the coffee residue and/or the coffee powder is preferably 1 $\mu$m or more, and more preferably 5 $\mu$m or more. From the same point of view, the upper limit of the maximum diameter of the coffee residue and/or the coffee powder is preferably 900 $\mu$m or less. The upper limit of the maximum diameter is more preferably 800 $\mu$m or less.

The maximum diameter of the coffee residue and/or the coffee powder is obtained by observing a cross section of the composite material with a microscope and obtaining the average of the maximum diameters of the observed respective coffee powders. More specifically, the maximum diameter can be determined in the same manner as the maximum diameter of the resin fine particles described later.

The content of the coffee residue and/or the coffee powder in the composite material is not particularly limited, but is preferably 1 to 80 mass%, and more preferably 5 to 70 mass% in the composite material. (Here, the expression "content of the coffee residue and/or the coffee powder" means the total content of the coffee residue and the coffee powder when the coffee residue and the coffee powder are contained in the composite material, and means the content of any of the coffee residue and the coffee powder when the coffee residue or the coffee powder is contained in the composite material). When the content of the coffee residue and/or coffee powder in the composite material is within the above range, it is possible to obtain a composite material superior in formability, mechanical properties, appearance quality, and the like while suppressing the cost for compounding the coffee residue and/or coffee powder with the resin. The content of the coffee residue and/or the coffee powder in the composite material can be determined by measuring cellulose fibers described later, for example, in an embodiment in which cellulose fibers not derived from a coffee residue and not derived from a coffee powder (also referred to as cellulose fibers not derived from a coffee residue or a coffee powder) are not separately blended.

The lower limit of the content of the coffee residue and/or the coffee powder in the composite material is preferably 10 mass% or more, more preferably 20 mass% or more, and even more preferably 25 mass% or more. The upper limit of the content of the coffee residue and/or the coffee powder in the composite material is preferably 70 mass% or less, more preferably 65 mass% or less, and even more preferably 55 mass% or less.

The composite material of the present invention contains a monosaccharide. Formability can be enhanced regardless of containing a coffee residue and/or a coffee powder, by containing a monosaccharide.

In the present invention, the expression "containing a monosaccharide" means that a monosaccharide is detected in a [judgement of monosaccharide] method described in Examples described later.

Examples of the monosaccharide include mannose, glucose, and galactose. The monosaccharide may be produced by actively decomposing a component of a coffee residue, or may be separately added. In addition, for example, when the coffee residue and/or the coffee powder, and the thermoplastic resin are kneaded, the mixture is kneaded in the presence of water to promote the hydrolysis of the polysaccharide component contained in the coffee residue and/or the coffee powder, whereby a large amount of monosaccharide can be contained in the composite material.

The content of the monosaccharide is not particularly limited, but is preferably 0.001 to 5 mass%, more preferably 0.002 to 4 mass%, and even more preferably 0.003 to 3 mass% in the composite material. When the content of the monosaccharide is within the above range, formability can be further improved while maintaining the mechanical properties of the composite material. The content of the monosaccharide in the composite material can be determined, for example, by extracting a pulverized composite material with water and measuring components in the water using high performance liquid chromatography (HPLC)/differential refractive index detector or the like.

In the composite material of the present invention, the thermoplastic resin is a resin which becomes a matrix of the composite material. The thermoplastic resin preferably contains a polyolefin resin. When the thermoplastic resin contains a polyolefin resin, the proportion of the polyolefin resin in the thermoplastic resin is preferably 50 mass% or more, also preferably 70 mass% or more, also preferably 80 mass% or more, and also preferably 90 mass% or more. Also, an embodiment in which the thermoplastic resin is composed of a polyolefin resin is preferable. As the thermoplastic resin, thermoplastic resins such as polyvinyl chloride resin, acrylonitrile-butadiene-styrene copolymer resin (ABS resin), acrylonitrile-styrene copolymer resin (AS resin), polyamide resin (nylon), polyethylene terephthalate resin, polybutylene terephthalate resin, and polystyrene resin; and thermoplastic biodegradable resins such as 3-hydroxybutyrate-co-3-hydroxyhexanoate polymer resin (PHBH), polybutylene succinate resin, and polylactic acid resin are also preferably used in place of the polyolefin resin or in addition to the polyolefin resin. As the thermoplastic resin constituting the composite material of the present invention, one or more types of these resins can be used. Among them, it is preferable to contain a polyolefin resin.

In the following description, a case where a polyolefin resin is used as the matrix resin will be mainly described. The description regarding the polyolefin resin described below is also applied to a case of using a thermoplastic resin other than the "polyolefin resin" unless otherwise specified.

The polyolefin resin is preferably a polyethylene resin or a polypropylene resin, or preferably a mixture of a polyethylene resin and a polypropylene resin (resin blend). Further, ethylene-based copolymers such as an ethylene-vinyl acetate copolymer, an ethylene-ethyl acrylate copolymer, an ethylene-methyl methacrylate copolymer, an ethylene-acrylic acid copolymer, an ethylenemethacrylic acid copolymer, an ethylene-glycidyl methacrylate copolymer, and an ethylene-propylene copolymer (copolymers containing ethylene as a constituent); and resins such as polybutene are preferable as the polyolefin resin used in the composite material. One type of polyolefin resin may be used singly, or two or more types thereof may be used in combination. The polyolefin resin constituting the composite material is preferably a polyethylene resin and/or a polypropylene resin, and more preferably a polypropylene resin.

Examples of the polyethylene include low density polyethylenes (LDPE) and high density polyethylenes (HDPE).

In the present invention, the low density polyethylene means a polyethylene having a density of 880 kg/m$^3$ or more and less than 940 kg/m$^3$. The high density polyethylene means a polyethylene having a density larger than the density of the above low density polyethylene.

The low density polyethylene may be so-called "low density polyethylene" and "ultralow density polyethylene" each having long chain branching, or linear low density polyethylene (LLDPE) in which ethylene and a small amount of $\alpha$-olefin monomer are copolymerized, or further may be "ethylene-$\alpha$-olefin copolymer elastomer" involved in the above density range.

The polyolefin resin may be acid-modified with an unsaturated carboxylic acid, a derivative thereof, or the like which is usually used.

As the polyolefin resin, a polyolefin resin that is not acid-modified and an acid-modified polyolefin resin may be used in combination. The polyolefin resin may contain a silane-modified polyolefin resin. In particular, when polypropylene is used, polypropylene is preferably used in combination with an acid-modified polypropylene resin. As the acid-modified polypropylene resin, a maleic acid-modified polypropylene resin is particularly preferable.

The polyolefin resin constituting the composite material of the present invention may contain a trace amount of carbonyl group. The carbonyl group (C=O) is observed as an absorption peak around 1,700/cm in an infrared absorption spectrum, for example. The presence of the carbonyl group is considered to enhance the adhesiveness of the composite material. The presence of such a carbonyl group can be derived from, for example, oxidization of the polyolefin resin itself or a raw material. The carbonyl group may be contained in a polyolefin resin component of polyethylene laminated paper having a polyolefin thin film layer and an aluminum thin film layer.

Since the polyolefin resin has a low melting and softening temperature, use of the polyolefin resin allows the coffee residue and/or the coffee powder contained in the composite material to be melt-kneaded without being exposed to high temperature and also allows formation. Therefore, it is possible to prevent or reduce deterioration, significant decomposition, and carbonization of the coffee residue and/or the coffee powder due to high temperature.

In addition, since the polyolefin resin has a low melting and softening temperature, when the composite material contains cellulose fibers as described later, use of the polyolefin resin allows the cellulose fibers contained to be melt-kneaded without being exposed to high temperature and also allows formation. Thus, the polyolefin resin can prevent or reduce deterioration of the cellulose fiber due to high temperature.

In addition, when the composite material contains resin particles as described later, use of the polyolefin resin can prevent exposure of the resin particles to high temperature, and allows the original mechanical properties of the resin particles to be sufficiently exhibited. For example, when the resin particle is a polyester resin or the like such as polyethylene terephthalate and polybutylene terephthalate, exposing these resins to high temperature at which the resins are softened and melted may promote deterioration of the resins, caused by hydrolysis of the resins when the resins have not been sufficiently dried in advance. However, when the composite material can be kneaded and formed without being exposed to high temperature, the above deterioration can be suppressed. As a result, load on moisture management of materials before melt-kneading is reduced.

The content of the polyolefin resin in the composite material is not particularly limited as long as the content is such that the composite material is integrated. For example, 10 to 80 mass% of the composite material is preferably a polyolefin resin, and 15 to 70 mass% is more preferably a polyolefin resin. The content is even more preferably 20 to 60 mass%.

In an embodiment of the composite material of the present invention, the polyolefin resin preferably contains a polypropylene resin (preferably 50 mass% or more, more preferably 60 mass% or more, even more preferably 70 mass% or more, and still even more preferably 80 mass% or more of the polyolefin resin is a polypropylene resin).

In another embodiment of the composite material of the present invention, the polyolefin resin preferably contains a low density polyethylene (preferably 50 mass% or more, more preferably 60 mass% or more, even more preferably 70 mass% or more, and still even more preferably 80 mass% or more of the polyolefin resin is a low density polyethylene). In another embodiment of the composite material of the present invention, the polyolefin resin contains a low density polyethylene resin in an amount of preferably 40 mass% or less, more preferably 30 mass% or less, and even more preferably 20 mass% or less of the polyolefin resin. In still another embodiment of the composite material of the present invention, the polyolefin resin contains a modified polyethylene resin in an amount of preferably 30 mass% or less, more preferably 20 mass% or less of the polyolefin resin.

An embodiment in which the polyolefin resin contains a low density polyethylene and resin particles described later, and the resin particles contain polyethylene terephthalate (preferably 50 mass% or more, more preferably 60 mass% or more, even more preferably 70 mass% or more, and still even more preferably 80 mass% or more of the resin particles are polyethylene terephthalate) is preferable as an embodiment of the composite material of the present invention.

When the polyolefin resin in the composite material contains polyethylene and polypropylene as a matrix resin, the contents thereof in the composite material can be determined based on the soluble mass ratio to hot xylene of the composite material.

-Soluble mass ratio to hot xylene-

The soluble mass ratio to hot xylene is determined as described below in the present invention. In accordance with measurement of a degree of crosslinking in JASO D618 as the standard for automotive electrical cables, 0.1 to 1 g is cut out from a formed sheet of the composite material and taken as a sample, and this sample is wrapped with a 400-mesh stainless steel mesh, and immersed into 100 mL of xylene at a predetermined temperature for 24 hours. Next, the sample was pulled up therefrom, and then the sample was dried in vacuum at 80°C for 24 hours. From the mass of the sample before and after the test, the soluble mass ratio to hot xylene G (%) is calculated according to the following formula:

$$G = \{(W0 - W)/W0\} \times 100$$

W0: mass of a composite material before being immersed into hot xylene; and
W: mass of a composite material after being immersed into hot xylene and then drying and removing the xylene.

When the mass ratio of the composite material dissolved to hot xylene at 138°C is taken as Ga (%) and the mass ratio of the composite material dissolved to hot xylene at 105°C is taken as Gb (%), Ga corresponds to the mass ratio of polyolefin (%), Ga-Gb corresponds to the mass ratio of polypropylene (%), and Gb corresponds to the mass ratio of polyethylene (%).

Here,

$$Ga = \{(W0 - Wa)/W0\} \times 100$$

$$Gb = \{(W0 - Wb)/W0\} \times 100$$

W0: mass of a composite material before being immersed into hot xylene;
Wa: mass of a composite material after being immersed into hot xylene at 138°C and then drying and removing the xylene; and

Wb: mass of a composite material after being immersed into hot xylene at 105°C and then drying and removing the xylene.

Also, when the insoluble mass ratio to hot xylene at 138°C is taken as Gc (%), Gc is the total amount of components obtained by removing the polyolefin resin from the composite material. When the composite material contains a cellulose fiber and does not contain other inorganic materials which do not pass through a mesh, such as aluminum, the amount of the resin particle can be calculated from the difference between this amount of Gc and the cellulose fiber amount.

$$Gc = \{Wa/W0\} \times 100$$

The matrix resin may contain, for example, a resin compatible with the polyolefin resin in addition to the polyolefin resin as long as the effect of the present invention is not impaired. As such a resin, a resin having a melting point and softening temperature close to those of the polyolefin resin is preferable. Examples thereof include polystyrene resins and polystyrene-based copolymers (copolymers containing a styrene component).

The composite material of the present invention is excellent in formability while containing a coffee residue and/or a coffee powder, and is also excellent in mechanical properties such as impact resistance characteristics. The reason is not clear, but it is considered that the monosaccharide serves as a lubricating component during processing, and on the other hand, serves as a binding component of a coffee residue and/or a coffee powder in a cooled composite material.

An embodiment of the resin composite material of the present invention may be one in which resin particles are further dispersed in the polyolefin resin in addition to the coffee residue and/or the coffee powder. The "resin particle" is a different type of resin from the resin constituting the matrix (matrix resin) (for example, polyolefin resin). In addition, the resin is preferably a resin having a melting point 10°C or more higher than the melting point of the polyolefin resin (a resin different from the polyolefin resin). The maximum diameter of the resin particle is preferably 10 μm or more. That is, an embodiment of the resin composite material of the present invention may be a resin composite material that is formed by dispersing a coffee residue and/or a coffee powder, and the resin particles in a polyolefin resin, and further contains a monosaccharide.

In the present invention, the resin particles may be particulate masses having various shapes. A state in which the matrix resin and the resin particle are formed by using "different types of resins" can be confirmed by visually observing the contour of the resin particle in observation with an optical microscope or the like, as described below. In the present invention, the maximum diameter of the resin particle is 10 μm or more.

The melting point of the resin particle is preferably 15°C or more higher, and more preferably 20°C or more higher than the melting point of the matrix resin. The "melting point of the matrix resin" is the melting point of a resin having the lowest melting point when the matrix resin is a blend of two or more resins.

A preferred embodiment of the composite material of the present invention is one in which the composite material is formed by dispersing the resin particles. As described above, when the composite material contains the resin particles, the formability of the composite material can be further enhanced, and desired mechanical properties can be further enhanced.

The resin particles may be dispersed, for example, in a scale shape or a small sheet shape, or a particulate shape, in the composite material. When the resin particle is a particle having a scale shape or a small sheet shape, the resin particles may also be dispersed in a state of being bent, curved, or twisted (these are collectively referred to as "bent structure").

The resin constituting the resin particle is preferably a resin incompatible with the matrix resin (for example, polyolefin resin). The term "incompatible" means that different types of resins (polymers) are not uniformly mixed in the molecular level by simple melt-kneading or the like. In general, in a composition or a formed body containing a plurality of resins which are incompatible to each other, phase separation is observed and a sea-island structure may be formed.

As described above, the maximum diameter of the resin particle contained in the composite material of the present invention is preferably 10 μm or more. When the maximum diameter is 10 μm or more, mechanical properties, particularly, impact resistance characteristics can be further enhanced. From the viewpoint of further enhancing mechanical properties, the maximum diameter of the resin particle is preferably 20 μm or more, more preferably 50 μm or more, even more preferably 100 μm or more, and still even more preferably 200 μm or more. Further, the maximum diameter is preferably 400 μm or more, and preferably 600 μm or more. The maximum diameter of the resin particle is preferably less than 4 mm from the viewpoint of formability.

From the same point of view, the aspect ratio (the value of the ratio of the maximum diameter to the minimum diameter [maximum diameter/minimum diameter]) of the resin particle is preferably 5 or more, more preferably 10 or more, even more preferably 20 or more, and still even more preferably 30 or more.

The resin particle contained in the composite material of the present invention preferably has a bent structure (usually irregular bent structure) from the viewpoint of further enhancing mechanical properties. Mechanical properties can be enhanced by anisotropy and anchor effect provided by the bent structure.

In the present invention, the maximum diameter of the resin particle being X $\mu$m or more means the following. That is, the cross section of the composite material or a press sheet thereof is observed as an observation surface with an optical microscope or the like. In the observation surface (that is, in a plan view from the observation surface), ten resin particles are selected in descending order of area in visual observation. The maximum diameters of individual ten resin particles are measured, and the average value of the maximum diameters of the ten resin particles is calculated. Then, the observation surface is changed and, in this observation surface, the average value of the maximum diameters of ten resin particles is calculated in the same manner. This is repeated and the average value of the maximum diameters of ten resin particles is obtained for three observation surfaces which are different from each other. When a value obtained by further averaging the obtained three average values is X $\mu$m or more, it is determined that the maximum diameter of the resin particle is X $\mu$m or more.

When the number of resin particles is less than 10 in one observation surface, observation is performed by increasing the observation surface by one until the number of resin particles reaches 10. In this case, a plurality of the observation surfaces which have been observed are collectively considered as one observation surface for determining the average value of the maximum diameters of the ten resin particles.

In the present invention, the aspect ratio of the resin particle being Y or more means the following. That is, the cross section of the composite material or a press sheet thereof is observed as an observation surface with an optical microscope or the like. In the observation surface, ten resin particles are selected in descending order of area in visual observation. The aspect ratios of individual ten resin particles (maximum diameter/minimum diameters of individual resin particles) are measured, and the average value of the aspect ratios of the ten resin particles is calculated. Then, the observation surface is changed and, in this observation surface, the average value of the aspect ratios of ten resin particles is calculated in the same manner. Similarly, the average value of the aspect ratios of ten resin particles is obtained for three observation surfaces which are different from each other. When a value obtained by further averaging the obtained three average values is Y or more, it is determined that the aspect ratio of the resin particle is Y or more.

When the number of resin particles is less than 10 in one observation surface, observation is performed by increasing the observation surface by one until the number of resin particles reaches 10. In this case, a plurality of the observation surfaces which have been observed are collectively considered as one observation surface for determining the average value of the aspect ratios of the ten resin particles.

In the present invention, the maximum diameter of the resin particle being less than Z $\mu$m means the following. That is, the cross section of the composite material or a press sheet thereof is observed as an observation surface with an optical microscope or the like. In the observation surface, ten resin particles are selected in descending order of area in visual observation. The maximum diameters of individual ten resin particles are measured, and the average value of the maximum diameters of the ten resin particles is calculated. Then, the observation surface is changed and, in this observation surface, the average value of the maximum diameters of ten resin particles is calculated in the same manner. Similarly, the average value of the maximum diameters of ten resin particles is obtained for three observation surfaces which are different from each other. When a value obtained by further averaging the obtained three average values is less than Z $\mu$m, it is determined that the maximum diameter of the resin particle is less than Z $\mu$m.

When the number of resin particles is less than 10 in one observation surface, observation is performed by increasing the observation surface by one until the number of resin particles reaches 10. In this case, a plurality of the observation surfaces which have been observed are collectively considered as one observation surface for determining the average value of the maximum diameters of the ten resin particles.

The term "maximum diameter" of the individual resin particle means the diameter of a minimum circle inscribed in the resin particle in a plan view from the observation surface. That is, the "maximum diameter" means the diameter of a circle with a minimum diameter, which encompasses the resin particle inside thereof and is inscribed in the resin particle at the same time. In other words, the expression "minimum circle inscribed in the resin particle" means a circle passing through at least two points on the circumference (contour) of the resin particle when viewed in a plain surface from the observation surface and the minimum circle among circles encompassing the circumference of the resin particle.

Further, the term "minimum diameter" of the individual resin particle means the thickness of the thinnest portion of the resin particle. When the resin particle is derived from a sheet-shaped resin raw material, for example, the thickness of the resin particle depends on the thickness of the sheet-shaped resin raw material. In this case, the minimum diameter of the resin particle is the thickness of this resin particle. Further, when the resin particle derived from a sheet-shaped resin raw material is bent and has an overlapping portion (for example, a laminate structure), for example, the thickness of one layer constituting the overlapping portion (for example, one layer constituting the laminate structure) is the minimum diameter of the resin particle. Incidentally, when the sheet-shaped resin raw material is a laminate sheet and constitutes the resin particle in a state in which respective layers constituting the laminate sheet are firmly adhered, the thickness of the entire laminate structure is the minimum diameter of the resin particle.

The press pressure in the preparation of the press sheet can be, for example, about 4.2 MPa.

The resin of the resin particle may contain a crystalline resin, an amorphous resin, or both resins.

As the crystalline resin, a resin having a melting point 10°C or more higher than the melting point of the matrix resin (for example, polyolefin resin). Such a crystalline resin can be dispersed as a desired resin particle in the matrix resin in the kneading and can effectively enhance the mechanical properties of the composite material. From this point of view, the crystalline resin is preferably a resin having a melting point 20°C or more higher than the melting point of the matrix resin, more preferably a resin having a melting point 30°C or more higher than the melting point of the matrix resin, and even more preferably a resin having a melting point 50°C or more higher than the melting point of the matrix resin.

Also, the crystalline resin is preferably a resin having a melting point of 170°C or more and/or a resin exhibiting an endothermic peak of 170°C or more and 350°C or less as measured by differential scanning calorimetry (DSC). Exhibiting an endothermic peak of 170°C or more and 350°C or less means that when a plurality of endothermic peaks are detected, at least one endothermic peak is 170°C or more and 350°C or less.

Examples of a polymer constituting such a crystalline resin include polyethylene terephthalate, polybutylene terephthalate, polyamide, and an ethylene-vinyl alcohol copolymer. Here, the resin particle preferably contains at least one type of polyethylene terephthalate, polybutylene terephthalate, and polyamide (preferably 50 mass% or more, more preferably 60 mass% or more, even more preferably 70 mass% or more, and still even more preferably 80 mass% or more of the resin particle is the at least one type). Further, the resin particle more preferably contains polyethylene terephthalate and/or polyamide (preferably 50 mass% or more, more preferably 60 mass% or more, even more preferably 70 mass% or more, and still even more preferably 80 mass% or more of the resin particle is polyethylene terephthalate and/or polyamide, in other words, the resin particle contains a polymer selected from polyethylene terephthalate and polyamide in the above mass% or more in total). Further, the resin particle even more preferably contains polyethylene terephthalate (preferably 50 mass% or more, more preferably 60 mass% or more, even more preferably 70 mass% or more, and still even more preferably 80 mass% or more of the resin particle is polyethylene terephthalate).

The polymer constituting the resin particle is preferably at least one type of polyethylene terephthalate, polybutylene terephthalate, and polyamide, also preferably polyethylene terephthalate and/or polyamide, and particularly preferably polyethylene terephthalate. The polyethylene terephthalate has a melting point of around 250 to 260°C, and has an endothermic peak due to fusion at around 250 to 260°C as measured by differential scanning calorimetry (DSC). That is, when the resin particle is polyethylene terephthalate, the resin particle has a melting point of around 250 to 260°C, and has an endothermic peak due to fusion at around 250 to 260°C as measured by differential scanning calorimetry (DSC).

As the amorphous resin, a resin having a glass transition temperature of 70°C or more is preferable. Examples of a polymer constituting such a resin include polycarbonate and polyvinyl chloride. The resin particle preferably contains polycarbonate and/or polyvinyl chloride (preferably 50 mass% or more, more preferably 60 mass% or more, even more preferably 70 mass% or more, and still even more preferably 80 mass% or more of the resin particle is polycarbonate and/or polyvinyl chloride, in other words, the resin particle contains a polymer selected from polycarbonate and polyvinyl chloride in the above mass% or more in total). Further, the polymer constituting the resin particle is preferably at least one type of polycarbonate and polyvinyl chloride.

The resin particle may be a form in which a plurality of the resins described above are laminated.

The resin particle may also be a resin particle having a thin film layer of aluminum. That is, aluminum firmly adhered to the resin of the resin particle is considered to constitute the resin particle in the present invention, and thus is not considered as an aluminum dispersoid which will be described later.

When the composite material of the present invention contains resin particles, the content of the resin particle is preferably 0.1 mass% or more and 60 mass% or less in the composite material. Mechanical properties can be further enhanced by adjusting the content to 0.1 mass% or more. From the viewpoint of further enhancing mechanical properties, the content of the resin particle in the composite material is more preferably 0.3 mass% or more, more preferably 0.5 mass% or more, even more preferably 1 mass% or more, and still even more preferably 2 mass% or more. Further, formability can be further enhanced by adjusting the content of the resin particle in the composite material to 60 mass% or less. From the viewpoint of formability, the content of the resin particle in the composite material is more preferably 50 mass% or less, even more preferably 40 mass% or less, even more preferably 30 mass% or less, even more preferably 20 mass% or less, even more preferably 12 mass% or less, and also preferably 10 mass% or less.

Here, the content of the resin particle can be determined by, for example, further subtracting the amount of the cellulose fiber measured by thermal analysis from the amount of the insoluble component obtained by immersing the composite material in hot xylene at a predetermined temperature to dissolve the polyolefin resin. For the temperature of the hot xylene, when the temperature is, for example, 138°C, polyethylene terephthalate, polyamide resin, and the like are not dissolved, and only polyolefin resin is dissolved.

The resin composite material of the present invention contains, in addition to cellulose fibers derived from a coffee residue and/or a coffee powder (in other words, cellulose fibers derived from a vegetable powder), separately blended cellulose fibers not derived from a coffee residue or a coffee powder (in other words, cellulose fibers not derived from a vegetable powder, hereinafter, the simple term "cellulose fiber" means a cellulose fiber not derived from a vegetable powder unless otherwise specified). When the composite material is formed by dispersing a coffee residue and/or a coffee powder, and cellulose fibers, and contains a monosaccharide, mechanical properties can be further enhanced. For example, impact resistance, flexural modulus, and formability can be enhanced to a desired high level in a well-balanced manner. In the present invention, the "cellulose fiber not derived from a coffee residue or a coffee powder" (in other words, a cellulose fiber not derived from a vegetable powder) is distinguished from the "powder containing a polysaccharide". That is, the "cellulose fiber not derived from a coffee residue and/or a coffee powder" (in other words, a cellulose fiber not derived from a vegetable powder) is not included in the "powder containing a polysaccharide".

In the composite material of the present invention, the content of the cellulose fiber is preferably 0.1 mass% or more and 60 mass% or less. Mechanical properties can be further enhanced by adjusting the content of the cellulose fiber to 0.1 mass% or more. From this point of view, the content of the cellulose fiber in the composite material is more preferably 1 mass% or more, even more preferably 5 mass% or more, even more preferably 8 mass% or more, even more preferably 10 mass% or more, and also preferably 15 mass% or more.

Further, formability can be further enhanced by adjusting the content of the cellulose fiber to 60 mass% or less. Moreover, a composite material, in which the cellulose fiber is uniformly dispersed by melt-kneading, can be stably obtained by adjusting the content of the cellulose fiber to 60 mass% or less. Thus, the water absorbing properties of the obtained composite material can be suppressed. From this point of view, the content of the cellulose fiber in the composite material is more preferably 50 mass% or less, even more preferably 40 mass% or less, and still even more preferably 30 mass% or less. By adjusting the content of the cellulose fiber to the above preferable range, the impact resistance and formability of the composite material of the present invention can be enhanced while the water absorbing properties of the composite material can be sufficiently suppressed.

The cellulose fiber dispersed in the composite material preferably contains a cellulose fiber having a fiber length of 0.3 mm or more. Mechanical properties such as impact resistance and tensile strength can be further improved by containing the cellulose fibers having a fiber length of 0.3 mm or more. From this point of view, the cellulose fiber dispersed in the composite material preferably contains a cellulose fiber having a fiber length of preferably 0.5 mm or more, more preferably 0.8 mm or more, and even more preferably 1 mm or more.

The length weighted average fiber length of the cellulose fiber dispersed in the composite material is preferably 0.3 mm or more. The mechanical properties of the composite material and the formed body thereof can be further improved by containing the cellulose fibers having a length weighted average fiber length of 0.3 mm or more. From this point of view, the length weighted average fiber length of the cellulose fiber is more preferably 0.6 mm or more. The length weighted average fiber length of the cellulose fiber in the composite material is ordinarily 1.3 mm or less.

Here, the length weighted average fiber length is determined for a dissolution residue (insoluble component) of the composite material when the composite material is immersed in a solvent capable of dissolving resin components in accordance with Pulps-Determination of fibre length by automated optical analysis specified by ISO 16065 2001 (JIS P8226 2006). When the resin constituting the composite material is a polyolefin resin, the length weighted average fiber length can be determined for a dissolution residue (insoluble component) in hot xylene (130 to 150°C) by the above measurement method.

The length weighted average fiber length is a value obtained by dividing the sum of the squares of the fiber lengths of respective measured fibers by the total of the fiber lengths of respective measured fibers. As the characteristics of this length weighted average fiber length, the influence of the fiber length of the fiber having a longer fiber length, and the influence of the probability density of the fiber having a longer fiber length than the number average fiber length are remarkable compared to the number average fiber length which is a simple average of the fiber lengths.

When the composite material of the present invention contains cellulose fibers, the total content of the cellulose fiber, and the coffee residue and/or the coffee powder in the composite material is preferably 2 to 90 mass%. Mechanical properties can be further enhanced by adjusting the total content of the cellulose fiber, and the coffee residue and/or the coffee powder in the composite material to 2 mass% or more. From this point of view, the total content of the cellulose fiber, and the coffee residue and/or the coffee powder in the composite material is more preferably 5 mass% or more, even more preferably 10 mass% or more, and particularly preferably 15 mass% or more. Further, formability can be further enhanced by adjusting the total content of the cellulose fiber, and the coffee residue and/or the coffee powder in the composite material of the present invention to 90 mass% or less. From this point of view, the total content of the cellulose fiber, and the coffee residue and/or the coffee powder in the composite material is more preferably 80 mass% or less, even more preferably 75 mass% or less, still even more preferably 65 mass% or less, and particularly preferably 50 mass% or less.

When the composite material of the present invention contains cellulose fibers, resin particles, a coffee residue and/or a coffee powder, the total content of the cellulose fiber, the resin particle, the coffee residue and/or the coffee powder in the composite material is preferably 2 to 80 mass%. Mechanical properties can be further enhanced by adjusting the total content of the cellulose fiber, the resin particle, and the coffee residue and/or the coffee powder in the composite material to 2 mass% or more. From this point of view, the total content of the cellulose fiber, the resin particle, and the coffee residue and/or the coffee powder in the composite material is more preferably 5 mass% or more, even more preferably 10 mass% or more, and particularly preferably 15 mass% or more. In addition, formability can be further enhanced by adjusting the total content of the cellulose fiber, the resin particle, the coffee residue and/or the coffee powder in the composite material of the present invention to 80 mass% or less. From this point of view, the total content of the cellulose fiber, the resin particle, and the coffee residue and/or the coffee powder in the composite material is more preferably 60 mass% or less, even more preferably 50 mass% or less, still even more preferably 40 mass% or less, and particularly preferably 35 mass% or less.

The total content (mass%) of the cellulose fiber derived from the coffee residue and/or the coffee powder and the cellulose fiber not derived from the coffee residue or the coffee powder contained in the composite material of the present invention is preferably 10 to 50 mass% and preferably 20 to 40 mass% in 100 mass% of the composite material.

The total content (mass%) of the cellulose fiber derived from the coffee residue and/or the coffee powder and the cellulose fibers not derived from the coffee residue or the coffee powder contained in the composite material of the present invention can be determined by employing a value determined by thermogravimetric analysis as follows.

<Method of determining total content of cellulose fiber (cellulose effective mass ratio)>

A composite material sample (10 mg) which has been dried in advance under the atmosphere at 80°C for 1 hour is subjected to a thermogravimetric analysis (TGA) from 23°C to 400°C under a nitrogen atmosphere at a heating rate of +10°C/min. Then, the content of cellulose fiber (mass%, also referred to as cellulose effective mass ratio) is calculated by the following [Formula I].

$$\text{[Formula I] (content of cellulose fiber [mass\%])} = \text{(amount of mass reduction of composite material sample at 200 to 380°C [mg])} \times 100/\text{(mass of composite material sample in dried state before thermogravimetric analysis [mg])}$$

Incidentally, when the temperature is raised to 200 to 380°C under a nitrogen atmosphere at a heating rate of +10°C/min, almost all of the cellulose fiber is thermally decomposed and lost. In the present invention, the mass% calculated by the above [Formula I] is taken as the content of the cellulose fiber contained in the composite material. Incidentally, a part of the cellulose fiber is not lost and remains within this temperature range in some cases, but when the temperature exceeds this temperature range, the cellulose fiber content cannot be distinguished from thermolysis loss or remaining components in a case where resin components are lost or compounds degradable at high temperatures are present together, for example, and as a result, it becomes difficult to measure the cellulose fiber amount. For this reason, the mass% calculated by the [Formula I] is used as the "cellulose fiber amount" for determining the content of the cellulose fiber in the present invention. The cellulose fiber amount thus determined and the mechanical properties of the composite material are highly related.

In the thermogravimetric analysis of the cellulose fiber, about 50 to 55 mass%, typically 53 mass%, of the content of the coffee residue is lost at 200°C to 380°C at which the cellulose fiber is lost. That is, when the composite material does not contain cellulose fibers but contains a coffee residue, an amount 100/53 times the amount of loss (reduced mass (%) at 200 to 380°C) in the thermogravimetric analysis is converted to the content of the coffee residue. The coffee powder also shows the same tendency of the thermogravimetric analysis as the coffee residue, and is converted in the same manner.

An embodiment of the composite material of the present invention is may be a composite material that is formed by dispersing a coffee residue and/or a coffee powder, and resin particles, and contains cellulose fibers having a fiber length of 0.3 mm or more and a monosaccharide. The formability and mechanical properties of the composite material can be achieved at a high level.

The composite material of the present invention is also preferably formed by dispersing aluminum in the polyolefin resin. The content of the aluminum (hereinafter, also referred to as aluminum dispersoid) in the composite material is preferably 0.1 mass% or more and 40 mass% or less. The thermal conductivity, visibility, and light shielding property of the composite material are improved by containing aluminum. In the composite material of the present invention containing a resin particle, the processability of the composite material can be further enhanced by adjusting the content of the aluminum to a level within this range, and a lump of aluminum becomes harder to be formed during processing of the composite material. This aluminum can be derived from an aluminum thin film layer of polyethylene laminated paper as a raw material. In the aluminum thin film layer of the polyethylene laminated paper, aluminum is not melted during melt-kneading, but is gradually sheared and micronized by shear force during kneading.

When thermal conductivity, flame retardancy, and the like are considered in addition to the viewpoint of the processability, the content of the aluminum in the composite material of the present invention is preferably 0.5 mass% or more and 30 mass% or less, and more preferably 1 mass% or more and 20 mass% or less.

The composite material of the present invention preferably contains an aluminum dispersoid having an X-Y maximum length of 0.005 mm or more. The proportion of the number of aluminum dispersoids having an X-Y maximum length of 3 mm or more in the number of aluminum dispersoids having an X-Y maximum length of 0.005 mm or more is preferably less than 10%. The processability of the composite material can be further enhanced by adjusting this proportion to a level less than 10%, the lump of aluminum becomes harder to be formed during processing of the composite material.

The X-Y maximum length is determined by observing the surface of the composite material. In this observation surface, a longer length of an X-axis maximum length and an Y-axis maximum length is taken as the X-Y maximum length by randomly drawing a straight line in a specific direction (X-axis direction) relative to the aluminum dispersoid to measure the maximum distance (X-axis maximum length) between two intersection points where the straight line intersects with the outer periphery of the aluminum dispersoid, and drawing another straight line in a direction (Y-axis direction) perpendicular to the specific direction to measure the maximum distance (Y-axis maximum length) between two intersection points where the Y-axis direction line intersects with the outer periphery of the aluminum dispersoid. The X-Y maximum length can be determined using image analysis software as described in Examples mentioned later.

In the aluminum dispersoid dispersed in the composite material of the present invention, the average of the X-Y maximum lengths of individual aluminum dispersoids is preferably 0.02 to 2 mm, and more preferably 0.04 to 1 mm. The average of the X-Y maximum length is taken as the average of the X-Y maximum lengths measured by using the image analysis software as described later.

At least a part of the coffee residue and/or the coffee powder, the monosaccharide, the matrix resin, the resin particle, the cellulose fiber, and the like, which can constitute the composite material of the present invention, can be derived from a recycled material. Also, at least a part of the aluminum which can be contained in the composite material of the present invention can also be derived from a recycled material. The production cost of the composite material can be suppressed by utilizing the recycled material.

Examples of the recycled material include a coffee residue and/or a coffee powder itself, and a portion capsule containing a coffee residue and/or a coffee powder. The portion capsule may contain a monosaccharide in addition to the coffee residue and/or the coffee powder. The container constituting the portion capsule generally includes a lid, a container main body, a structure (for example, a partition plate, a filter, or the like) disposed in the container main body, and the like, and contains, for example, a resin component such as a polyolefin resin and/or aluminum as a material constituting these. The portion capsule may contain water.

Examples of the recycled material that can also be used in the present invention include polyolefin resin laminated paper having paper and a polyolefin thin film layer, polyolefin resin laminated paper having paper, a polyolefin thin film layer, and an aluminum thin film layer, and a beverage pack and/or food pack formed by using these laminated papers. In the present invention, the term "thin film" means a film (sheet) having a thickness of preferably 2 mm or less, and more preferably 1 mm or less in a dried state. The "thin film" may have a thickness of 500 $\mu$m or less, 200 $\mu$m or less, or 100 $\mu$m or less in a dried state.

In addition, waste paper, regenerated resin, and the like can also be used as a supply source of the cellulose fiber.

The above beverage pack and food pack may be those before use, a recovered material after use, or broken paper of polyolefin laminated paper and the like discharged in the production step of the beverage pack and food pack, or a combination thereof.

Also, a polyolefin thin film piece to which the cellulose fiber is adhered, obtained by processing the above laminated paper and/or beverage/food pack by a pulper to strip off and remove a paper portion (hereinafter, referred to as "cellulose fiber-adhering polyolefin thin film piece" and in the "cellulose fiber-adhering polyolefin thin film piece", a thin film piece obtained by processing polyethylene laminated paper having an aluminum thin film layer by a pulper is also referred to as "cellulose fiber-aluminum-adhering polyolefin thin film piece") can also be used as the recycled material.

A sheet of a resin different from the polyolefin resin (resin sheet corresponding to the resin particle) or a laminate having a polyolefin resin sheet and a sheet of a resin different from the polyolefin resin (resin sheet corresponding to the resin particle) can also be used as a recycled material. Further, a laminate having a structure in which an aluminum thin film sheet is laminated on this laminate can be used as a recycled material. A pulverized material thereof and the like can also be used. A packaging material such as a food pack and the like of a laminate structure having a polyolefin resin sheet and a sheet of a resin different from the polyolefin resin (resin sheet corresponding to the resin particle) can also be used as a recycled material.

The proportion of components derived from the recycled material in the composite material of the present invention is preferably 10 mass% or more, more preferably 20 mass% or more, even more preferably 30 mass% or more, and still even more preferably 40 mass% or more based on the dry mass.

Also in a case where such a recycled material is used as a raw material, the composite material of the present invention having desired physical properties can be obtained by, for example, melt-kneading described later.

The composite material of the present invention may contain an inorganic material other than the aluminum dispersoid. Flexural modulus, impact resistance, and flame retardancy can be improved by containing the inorganic material. Examples of the inorganic material include calcium carbonate, talc, clay, magnesium oxide, aluminum hydroxide, magnesium hydroxide, and titanium oxide.

In a preferred embodiment of the present invention, 5 to 70 mass% of a coffee residue and/or a coffee powder, 0.001 to 5 mass% of a monosaccharide, and 10 to 80 mass% of a polyolefin resin are contained in 100 mass% of a composite material.

In another preferred embodiment of the present invention, 5 to 70 mass% of a coffee residue and/or a coffee powder, 0.001 to 5 mass% of a monosaccharide, and 0.1 to 40 mass% of a cellulose fiber not derived from a coffee residue or a coffee powder, and 10 to 80 mass% of a polyolefin resin are contained in 100 mass% of a composite material.

In still another preferred embodiment of the present invention, 5 to 70 mass% of a coffee residue and/or a coffee powder, 0.001 to 5 mass% of a monosaccharide, 0.1 to 40 mass% of a cellulose fiber not derived from a coffee residue or a coffee powder, 0.1 to 10 mass% of a resin particle, and 10 to 80 mass% of a polyolefin resin are contained in 100 mass% of a composite material.

In still another preferred embodiment of the present invention, 5 to 70 mass% of a coffee residue and/or a coffee powder, 0.001 to 5 mass% of a monosaccharide, 0.1 to 40 mass% of a cellulose fiber not derived from a coffee residue or a coffee powder, 0.1 to 10 mass% of a resin particle, 0.1 to 3 mass% of aluminum, and 10 to 80 mass% of a polyolefin resin are contained in 100 mass% of a composite material.

The composite material of the present invention may contain a flame retardant, an antioxidant, a stabilizer, a weathering agent, a compatibilizer, an impact improver, a modifier, or the like according to the purpose. The composite material of the present invention can contain an oil component or various types of additives for improving processability. Examples thereof include paraffin, modified polyethylene wax, stearate, hydroxy stearate, a vinylidene fluoridebased copolymer such as a vinylidene fluoride-hexafluoropropylene copolymer, and organic modified siloxane.

The composite material of the present invention can also contain carbon black, various pigments and dyes. The composite material of the present invention can contain a metallic luster colorant. The composite material of the present invention can also contain an electrical conductivity-imparting component such as electrically conductive carbon black. Further, the composite material of the present invention can also contain a thermal conductivity-imparting component.

The composite material of the present invention may be crosslinked. Examples of the crosslinking agent include organic peroxide, and specific examples include dicumyl peroxide. The composite material of the present invention may be in a crosslinked form by a silane crosslinking method.

In the composite material of the present invention, a melt flow rate (MFR) at a temperature of 230°C and a load of 5 kgf is preferably 0.1 to 100 g/10 min. Further satisfactory formability can be realized, and the impact resistance of the formed body obtained can be further enhanced by adjusting MFR in the above-described preferable range.

The shape of the composite material of the present invention is not particularly limited. For example, the composite material of the present invention may be formed into a pellet form, or may also be formed into a desired shape. When the composite material of the present invention is in the form of pellets, this pellet is suitable as a material for forming a formed article (resin product).

The composite material of the present invention can also be used as a modified masterbatch containing a coffee residue and/or a coffee powder and a monosaccharide with respect to a polyolefin resin such as high density polyethylene or polypropylene, and further containing resin particles and cellulose fibers.

In the composite material of the present invention, the moisture content is preferably less than 1 mass%.

Subsequently, with regard to the production method for the composite material of the present invention, a preferred embodiment will be described below, but the composite material of the present invention is not limited to the material obtained by the method described below.

An example of the method for producing a composite material of the present invention includes a step of melt-kneading at least a polyolefin resin, a coffee residue and/or a coffee powder, and a monosaccharide at a temperature at which the polyolefin resin melts (that is, the melting point of the polyolefin resin or higher) and carbonization of the coffee residue and/or the coffee powder and the monosaccharide does not proceed, to obtain a resin composite material that is formed by dispersing the coffee residue and/or the coffee powder in the polyolefin resin and contains the monosaccharide. The deterioration of the coffee residue and/or the coffee powder and the monosaccharide can be prevented by melt-kneading under the above temperature condition.

Another example of the method for producing a composite material of the present invention includes a step of melt-kneading at least a polyolefin resin and a coffee residue and/or a coffee powder in the presence of water to promote the hydrolysis of polysaccharide components in the coffee residue and/or the coffee powder, thus obtaining a resin composite material that is formed by dispersing the coffee residue and/or the coffee powder in the polyolefin resin and contains the monosaccharide. By melt-kneading under the above conditions, the deterioration of the coffee residue and/or the coffee powder can be prevented, and a resin composite material containing a monosaccharide can be obtained.

When the monosaccharide contained in the composite material is produced by decomposing the components of the coffee residue and/or the coffee powder, the amount of water present during kneading is preferably 25 parts by mass or more, more preferably 50 parts by mass or more, and more preferably 150 parts by mass or more, with respect to 100 parts by mass of the coffee residue and/or the coffee powder (in terms of dry matter). The amount of the water present during kneading is preferably 1,000 parts by mass or less with respect to 100 parts by mass of the coffee residue and/or the coffee powder in terms of dry matter from the viewpoint of productivity. The amount is more preferably 500 parts by mass or less, and even more preferably 300 parts by mass or less.

The supply source of the water present during kneading is not particularly limited. The water present during kneading may be contained in the raw material or may be separately blended.

In a case of using a raw material containing moisture, the moisture content in the raw material may be a moisture content at which the total amount of moisture in the total of the raw material becomes a moisture amount with respect to the amount of the coffee residue and/or the coffee powder.

The temperature during melt-kneading is preferably set to 175°C or higher, and more preferably set to 175 to 185°C from the viewpoint of promoting hydrolysis although it cannot be uniquely determined because it varies depending on the type, the blending amount, and the like of the matrix resin, the coffee residue and/or the coffee powder to be used. From the viewpoint of promoting hydrolysis, the time for melt-kneading in the presence of water is set to 30 seconds or more, and preferably 1 minute or more. In addition, although depending on the kneading method, the time for melt-kneading is also preferably such that water is sufficiently evaporated.

An example of the method for producing a composite material of the present invention includes melt-kneading at least a polyolefin resin, a coffee residue and/or a coffee powder, cellulose fibers, a resin sheet for incorporating the resin particles (in the present invention, the term "resin sheet" means a sheet containing a resin different from the matrix resin, preferably a sheet made of a resin different from the matrix resin), and a monosaccharide at a temperature at which the polyolefin resin melts (that is, a temperature higher than the melting point of the polyolefin resin), at which carbonization of the coffee residue and/or the coffee powder, the monosaccharide, and the cellulose fibers does not proceed, and at which the resin sheet does not melt (that is, a temperature lower than the melting point of the resin of the resin sheet), to obtain a resin composite material that is formed by dispersing the coffee residue and/or the coffee powder, the cellulose fibers, and the resin particles in the polyolefin resin and contains the monosaccharide. By melt-kneading under the above temperature condition, the deterioration of the coffee residue and/or the coffee powder, the monosaccharide, and the cellulose fibers can be prevented, and a dispersion state of resin particles having a desired shape can be formed. In the production method of the above embodiment, the hydrolysis of polysaccharide components may be promoted to produce a monosaccharide by melt-kneading in the presence of water instead of blending the monosaccharide.

The resin constituting the resin sheet is a resin of the above resin particle, and the preferred embodiment thereof is as described above. In the method of producing the composite material of the present invention, the resin sheet becomes the resin particle in the obtained composite material. The resin sheet is used as is, and may also be made into a resin particle by forming the resin sheet into small pieces by melt-kneading. Also, the resin sheet may be made into a cut material or a pulverized material of the resin sheet having a certain size in advance, and then subjected to melt-kneading. In the method of producing the composite material of the present invention, it is preferable that the resin sheet is not actively melted in kneading under the above temperature condition.

As a common supply source of polyolefin resin and the above resin sheet, a laminate having a polyolefin resin sheet and the above resin sheet can be used. In this case, in addition to the laminate, a polyolefin resin, the above resin sheet, and the like which are not derived from the laminate may also be blended.

Another preferred embodiment of the method for producing a composite material of the present invention includes, for example, melt-kneading at least a polyolefin resin, a coffee residue and/or a coffee powder, a monosaccharide, and the resin particles having a size adjusted in advance at a temperature at which the polyolefin resin melts (that is, a temperature higher than the melting point of the polyolefin resin), at which carbonization of the coffee residue and/or the coffee powder does not proceed, and at which the resin particles do not melt (that is, a temperature lower than the melting point of the resin of the resin particles), to obtain a resin composite material that is formed by dispersing the coffee residue and/or the coffee powder and the resin particles in the polyolefin resin and contains the monosaccharide. By melt-kneading under the above temperature condition, the deterioration of the coffee residue and/or the coffee powder can be prevented, and a dispersion state of resin particles having a desired size can be formed. In the production method of the above embodiment, the hydrolysis of polysaccharide components may be promoted to produce a monosaccharide by melt-kneading in the presence of water instead of blending the monosaccharide.

As a supply source of the cellulose fiber, a material containing cellulose as a main component can be used as a raw material. Specific examples thereof include pulp, paper, waste paper, paper powder, regenerated pulp, paper sludge, laminated paper, broken paper of laminated paper, a resin thin film piece to which a cellulose fiber is adhered, obtained by removing a certain amount of a paper component from laminated paper, and other cellulose fibers derived from a plant. In addition to the cellulose fiber, the paper and waste paper may contain a filler (kaolin or talc, for example) generally contained in order to enhance the whiteness of the paper, and a sizing agent, and the like.

Here, the sizing agent is an additive to be added for the purpose of suppressing permeability of liquid such as ink into the paper, preventing set-off or blurring, and providing the paper with a certain degree of water proofness. Examples of a main agent thereof include rosin soap, alkylketene dimer, alkenyl succinic anhydride, and polyvinyl alcohol. Examples of a surface sizing agent include oxidized starch, a styrene-acryl copolymer, and a styrene-methacryl copolymer. Further, the paper, waste paper, or the like may contain various types of additives, an ink component, lignin, and the like, in addition to the above components.

The laminated paper may contain a polyolefin resin, a cellulose fiber, a filler (kaolin or talc, for example) generally contained in order to enhance the whiteness of the paper, a sizing agent, and the like.

The pulp includes mechanical pulps and chemical pulps, and the mechanical pulp contains lignin and contaminants. Meanwhile, the chemical pulp hardly contains lignin, but contains contaminants other than lignin in some cases.

As a common supply source of the polyolefin resin and the cellulose fiber, polyolefin resin laminated paper and/or a cellulose fiber-adhering polyolefin thin film piece can also be used. In this case, a polyolefin resin, a cellulose fiber, and the like which are not derived from these may be blended.

In the method of producing the composite material of the present invention, an aluminum thin film sheet can be mixed in the above melt-kneading. As a result, a resin composite material that is formed by dispersing a coffee residue and/or a coffee powder, resin particles, and aluminum in a polyolefin resin, and contains a monosaccharide can be obtained. In this case, as a supply source of the polyolefin resin, the resin sheet, and the aluminum thin film sheet, a laminate having a polyolefin resin sheet, the resin sheet and the aluminum thin film sheet can be used. In this case, a polyolefin resin, the above resin sheet, and the aluminum thin film sheet, and the like which are not derived from the laminate may be blended in addition to the laminate.

For example, as a common supply source of the polyolefin resin and the aluminum thin film sheet, polyolefin resin laminated paper having an aluminum thin film layer and/or a cellulose fiber-aluminum-adhering polyolefin thin film piece can also be used. In this case, a polyolefin resin, aluminum, and the like which are not derived from these may also be blended.

The above recycled material can be used as a common supply source of the polyolefin resin, the coffee residue and/or the coffee powder, the cellulose fibers, the resin sheet for incorporating resin particles, the monosaccharide, the aluminum thin film sheet, and the like.

In the production method of the present invention, melt-kneading can also be performed by blending water. Blending of water promotes the production of the monosaccharide by hydrolysis, while suppressing carbonization (dehydration reaction) of the saccharide. In addition, blending of water affects the characteristics and physical properties of the composite material, and also contributes to, for example, generation of a desired composite material in which resin particles with a desired shape are homogeneously dispersed. Meanwhile, even when water is blended, melt-kneading is performed at a temperature at which the resin of the resin sheet is not melted. Therefore, the influence on the physical properties of the resin sheet and the resin itself constituting the resin particle is small. For example, hydrolysis or the like of the resin constituting the resin sheet or the resin particles hardly occurs.

In the melt-kneading, water may be blended from the beginning of melt-kneading or from the middle of melt-kneading. Water is preferably blended from the beginning of melt-kneading.

The blending amount of water in a case of blending water and performing melt-kneading in the presence of water is the same as the abundance of water described for "a case where the monosaccharide contained in the composite material is generated by decomposing the components of the coffee residue and/or the coffee powder".

The blending amount of each raw material can be appropriately set so as to satisfy the content in the composite material described above.

The formed body of the present invention is a formed body formed by forming the composite material of the present invention into a desired shape. Examples of the formed body of the present invention include formed bodies of various structures such as a sheet shape, a plate shape, and a tubular (annular) shape. Examples of the tubular formed body include a straight tube with a cross section of a substantially cylindrical shape or a square shape, a curved tube, a corrugated tube to which a corrugated shape is imparted. Examples of the tubular formed body also include divided bodies obtained by dividing the tubular formed body such as the straight tube with a cross section of a substantially cylindrical shape or a square shape, the curved tube, the corrugated tube to which a corrugated shape is imparted into two pieces, for example. The formed body of the present invention can also be used as a joint member for the tube as well as members for civil engineering, building materials, automobiles, or protection of electrical cables. The formed body of the present invention can be obtained by subjecting the composite material of the present invention to ordinary forming means such as injection molding, extrusion molding, press molding, and blow molding.

The formed body of the present invention is excellent in mechanical properties and can be widely used. The formed body of the present invention is suitable as, for example, a material or a constituent member for civil engineering, building materials, furniture, automobiles. When the formed body of the present invention is used for furniture, the formed body can be a cup, a tray, a dish, various containers, tableware, a shelf board, a storage case, a chest, or the like.

EXAMPLES

The present invention will be described in more detail based on examples given below, but the invention is not meant to be limited by these.
First, a measurement method and an evaluation method for each indicator in the present invention will be described.

[Judgment of monosaccharide]

A composite material pulverized to a size of 5 mm or less was immersed in water for 20 hours, and components extracted into water were measured using high performance liquid chromatography (HPLC). In the row of "Monosaccharide" in the tables, a case where a monosaccharide was detected was shown as (o), and a case where no monosaccharide was detected was shown as (x).
The composite materials of Examples 1 to 6 contained 0.003 to 3 mass% of a monosaccharide.

[Cellulose fiber length]

First, 0.1 to 1 g of a composite material formed in a sheet shape was cut out, and this was used as a sample. This sample was wrapped with a 400-mesh stainless steel mesh, and immersed into 100 mL xylene at 138°C for 24 hours. Next, the sample was pulled up therefrom, and then the sample was dried in vacuum at 80°C for 24 hours. Then, 0.1 g of the dry sample was well dispersed into 50 mL of ethanol, and the obtained dispersion was added dropwise to a petri dish, and a part in the range of 15 mm × 12 mm was observed with a microscope. A case where a cellulose fiber having a fiber length of 0.3 mm or more was observed and a cellulose fiber having a fiber length of 0.8 mm or more was not observed was evaluated as (o); a case where a cellulose fiber having a fiber length of 0.8 mm or more was observed was evaluated as (◉); and a case where a cellulose fiber having a fiber length of 0.3 mm or more was not observed was evaluated as (∆).

[Content of cellulose fiber in composite material (cellulose effective mass ratio)]

A composite material sample (10 mg) which has been dried in advance under the atmosphere at 80°C x 1 hour was subjected to a thermogravimetric analysis (TGA) from 23°C to 400°C under a nitrogen atmosphere at a heating rate of +10°C/min. Then, the content of cellulose fiber (mass%) was calculated by the following [Formula I]. The same five composite material samples were prepared, and the thermogravimetric analysis was performed for each of the composite material samples in the same manner as described above. The average value of five calculated values of the contents (mass%) of the cellulose fibers was obtained, and the average value was taken as the content (mass%) of the cellulose fiber.

[Formula I] (content of cellulose fiber [mass%]) = (amount of mass reduction of composite material sample at 200 to 380°C [mg]) × 100/(mass of composite material sample in dried state before thermogravimetric analysis [mg])

[Judgment of maximum diameter of resin particle]

A composite material was pressed (press pressure 4.2 MPa) to obtain a 6 mm-thick formed body. The vertical cross section of this formed body (cross section in the 6 mm-thick direction) was measured as an observation surface by the method described above. A case where the average of the maximum diameters of ten resin particles is 400 μm or more and less than 4 mm was evaluated as (○); a case where the average of the maximum diameters of ten resin particles is 10 μm or more and less than 400 μm, or 4 mm or more was evaluated as (∆); and a case where the average of the maximum diameters of ten resin particles is less than 10 μm was evaluated as (x).

[Judgment of aspect ratio of resin particle]

A composite material was pressed (press pressure 4.2 MPa) to obtain a 6 mm-thick formed body. The vertical cross section of this formed body was measured as an observation surface by the method described above. A case where the average of the aspect ratios of ten resin particles is 30 or more was evaluated as (○); a case where the average of the aspect ratios of ten resin particles is 5 or more and less than 30 was evaluated as (△); and a case where the average of the aspect ratios of ten resin particles is less than 5 was evaluated as (×).

[Shape of resulting material (resin composite material)]

The appearance of the resin composite material obtained by melt-kneading was visually evaluated. A material in a state of being a bulk (mass) was evaluated as an acceptable product (○); a material in which a state of being a bulk (mass) and a particulate body in a state of not being kneaded (a material which was not combined by melt-kneading) are mixed was evaluated as (△); and a particulate body in a state of not being kneaded was evaluated as (x).

[Tensile strength]

As an index of mechanical properties, tensile strength was evaluated.
A test piece was prepared by injection molding, and tensile strength was measured for a No. 2 test piece in accordance with JIS K 7113. A unit is MPa. A tensile strength of 20 MPa or more was evaluated as (○); a tensile strength of 10 MPa or more and less than 20 MPa was evaluated as (△); and a tensile strength of less than 10 MPa was evaluated as (x).

[Flexural modulus and flexural strength]

As an index of mechanical properties, flexural modulus and flexural strength were evaluated.
Using a composite material, flexural modulus was measured for a 4 mm-thick sample at a flexural rate of 2 mm/min in accordance with JIS K 7171 2016. More specifically, a test piece (thickness: 4 mm, width: 10 mm, and length: 80 mm) was prepared by injection molding, a load was applied to the test piece with a span of 64 mm, a curvature radius of 5 mm at a supporting point and an action point, and a test speed of 2 mm/min, and a flexural test was conducted in accordance with JIS K 7171 2016, and flexural modulus (MPa) and flexural strength (MPa) were determined.
Here, the flexural modulus Ef can be determined by determining

flexural stress of1 measured at a deflection amount S1 in flexural strain 0.0005 ($\varepsilon$f1) and
flexural stress of2 measured at a deflection amount S2 in flexural strain 0.0025 ($\varepsilon$f2), and
dividing a difference therebetween by a difference between respective amounts of strain corresponding thereto, namely, according to the following formula:

$$Ef = (\sigma f2 - \sigma f1)/(\varepsilon f2 - \varepsilon f1).$$

In this case, the deflection amount S for determining the flexural stress can be determined according to the following formula:

$$S = (\varepsilon f \cdot L2)/(6 \cdot h)$$

S is deflection amount,
$\varepsilon$f is flexural strain,
L is span, and
h is thickness.

A flexural modulus of 2,500 MPa or more was evaluated as (◎); a flexural modulus of 2,000 MPa or more and less than 2,500 MPa was evaluated as (○); a flexural modulus of 1,400 MPa or more and less than 2,000 MPa was evaluated as (△); and a flexural modulus of less than 1,400 Ma was evaluated as (x).
A flexural strength of 40 MPa or more was evaluated as (◎); a flexural strength of 20 MPa or more and less than 40 MPa was evaluated as (○); a flexural strength of 10 MPa or more and less than 20 MPa was evaluated as (△); and a flexural strength of less than 10 MPa was evaluated as (x).

[Impact resistance]

As an index of mechanical properties, impact resistance was evaluated.

A test piece (thickness: 4 mm, width: 10 mm, and length: 80 mm) was prepared by injection molding, and Izod impact strength was measured using a notched test piece in accordance with JIS K 7110. A unit of the impact resistance is $kJ/m^2$. An Izod impact value of 2.0 $kJ/m^2$ or more was evaluated as (o); an Izod impact value of 1.0 $kJ/m^2$ or more and less than 2.0 $kJ/m^2$ was evaluated as ($\triangle$); and an Izod impact value of less than 1.0 $kJ/m^2$ was evaluated as ($\times$).

A case where each index of the mechanical properties is ($\triangle$) or more is evaluated as the mechanical properties being acceptable.

[Formability]

A case where formation could be carried out without problems by injection molding (cylinder temperature: 200°C, injection speed: 150 mm/sec, mold temperature: 40°C, the length of the spool of the mold was 130 mm, the spool expands in diameter toward the downstream side, the diameter on the downstream side (runner side) was 7 mm, and the diameter on the upstream side was 3 mm) was evaluated as (o), and a case where formation could be carried out although slight clogging or material breakage occurred in the spool was evaluated as ($\triangle$). (o) is acceptable.

[Melt flow rate]

A melt flow rate was measured under conditions of a temperature of 230°C and a load of 5 kgf in accordance with JIS-K7210. A unit of MFR is g/10 min.

<Example 1>

A used coffee capsule 1 was prepared. In the used coffee capsule 1, a coffee residue is housed in a plastic container mainly composed of a polypropylene resin (PP). Further, a partition aluminum foil is provided in the plastic container. The plastic container main body is made of PP, and the container lid is made of a laminated film of polyethylene terephthalate (PET)/PP. Since the coffee capsule 1 is used, it contains water. The moisture amount (moisture content) in the whole used coffee capsule 1 is 60 mass%. The used coffee capsule 1 in a dry state contains 70 mass% of a coffee residue, 29 mass% of PP, and 1 mass% of aluminum (Al) and PET in total.

The used coffee capsule 1 and a modified PP resin 1 (a polypropylene resin modified with maleic anhydride, acid value: 41 mgKOH/g) were charged into a batch-type kneader in the blending amounts shown in Table 1 in terms of a dry state for the used coffee capsule 1, and kneaded in the presence of water (meaning in the presence of water contained in the used coffee capsule 1) for 10 minutes with the maximum temperature during kneading set to 180°C to obtain a composite material.

<Example 2>

A composite material was obtained in the same manner as in Example 1 except that the modified PP resin 1 was not blended.

<Example 3>

A composite material was obtained in the same manner as in Example 1 except that an empty capsule 1 (only a capsule (plastic container main body) obtained by cutting the container and removing the coffee residue inside from the used coffee capsule 1), the used coffee capsule 1, and the modified PP resin 1 were blended in the blending amounts shown in Table 1.

<Examples 4 and 5>

A composite material was obtained in the same manner as in Example 1 except that a broken paper 1 (broken paper of polyethylene laminated paper is pulverized using a rotary cutter mill (manufactured by Horai Co., Ltd.)), the used coffee capsule 1, and the modified PP resin 1 were blended in the blending amounts shown in Table 1. The polyethylene laminated paper includes paper, a polyethylene thin film layer, and an aluminum thin film layer. The composition ratio is 75 mass% of paper, 18 mass% of low density polyethylene (LDPE), and 7 mass% of aluminum foil.

<Example 6>

A composite material was obtained in the same manner as in Example 1 except that the broken paper 1, the empty capsule 1, the used coffee capsule 1, and the modified PP resin 1 were blended in the blending amounts shown in Table 1.

<Comparative Example 1>

The used coffee capsule 1 was dried until the moisture content reached 0.2 mass%, then charged into a batch-type kneader, and kneaded for 10 minutes with the maximum temperature during kneading set to 180°C. In this case, a composite material in which the respective components are integrated could not be obtained.

<Comparative Example 2>

Melt-kneading was carried out in the same manner as in Comparative Example 1 except that the used coffee capsule 1 was dried until the moisture content reached 0.2 mass%, and then the used coffee capsule 1, the broken paper 1, and the modified PP resin 1 were blended in the blending amounts shown in Table 1. In this case, a composite material in which the respective components are integrated could not be obtained.

<Comparative Example 3>

The used coffee capsule 1 (moisture content: 60 mass%) was charged into a batch-type kneader, and kneaded for 5 minutes with the maximum temperature during kneading set to 170°C to obtain a composite material.

<Comparative Example 4>

The used coffee capsule 1 was subjected to a drying treatment to reduce the moisture amount (moisture content: 8 mass%), and then charged into a batch-type kneader, and kneaded for 10 minutes with the maximum temperature during kneading set to 180°C to obtain a composite material.

The upper rows of the following Table 1 ("Used coffee capsule 1" to "Broken paper 1") show the blending amount of each raw material when the total amount of raw materials is 100 mass%. The middle rows ("Coffee residue" to "Al") show the respective contents (mass%) of the coffee residue, PP, LDPE, modified PP resin, cellulose fibers, PET, and aluminum, and the presence of the monosaccharide in the composite material, together with the cellulose fiber length, the cellulose fiber content, and the maximum diameter and the aspect ratio of the resin particle. The lower rows show the evaluation results of each composite material.

In addition, when the particle size of the coffee residue was confirmed for the composite materials of Example 1 and Example 2 by observation of the cross section with an optical microscope, the maximum diameter was 14.3 $\mu$m in Example 1 and 18.5 $\mu$min Example 2.

The table shows that the composite materials of Examples containing a monosaccharide are excellent in formability in spite of containing a coffee residue. In addition, the comparison between Example 2 and Comparative Example 1 shows that both composite materials have the same composition except that the presence of the monosaccharide is different, but the composite material of Example 2 has a high MFR and excellent mechanical properties. In addition, the comparison between Example 5 and Comparative Example 2 shows that both composite materials have the same composition except that the presence of the monosaccharide is different, and both composite materials contain cellulose fibers derived from paper, have relatively high strength, and have a low MFR. However, Example 5 has a higher MFR, higher mechanical properties, and better formability than those of Comparative Example 2. The composite material of Comparative Example 2 has poor formability that causes breakage in the spool, whereas the composite material of Example 5 has good formability without breakage in the spool. This is considered to be because the composite material of Example 5 has a better balance between MFR and mechanical properties.

In addition, the comparison among the composite materials of Examples 4 to 6 containing cellulose fibers of 0.3 mm or more and the composite materials of Examples 1 and 3 not containing cellulose fibers of 0.3 mm or more shows that the composite materials of Examples 4 to 6 containing cellulose fibers of 0.3 mm or more are excellent in mechanical properties and also excellent in processability in spite of containing a coffee residue.

[Table 1-1]

Table 1

| | | | Ex. 1 | Ex. 2 | Ex. 3 | Ex. 4 | Ex. 5 | Ex. 6 |
|---|---|---|---|---|---|---|---|---|
| Used coffee capsule 1 | | mass% | 95 | 100 | 70.5 | 76 | 57 | 43 |
| Modified PP resin 1 | | mass% | 5 | - | 2.5 | 4 | 3 | 3 |
| Empty capsule 1 | | mass% | - | - | 27 | - | - | 14 |
| Broken paper 1 | | mass% | - | - | - | 20 | 40 | 40 |
| Coffee residue | | mass% | 66.7 | 70.2 | 49.5 | 53.3 | 40.0 | 30.2 |
| PP | | mass% | 27.6 | 29.1 | 46.8 | 22.1 | 16.6 | 26.2 |
| LDPE | | mass% | - | - | - | 3.6 | 7.2 | 7.2 |
| Modified PP resin 1 | | mass% | 5.0 | - | 2.5 | 4.4 | 3.8 | 3.8 |
| Paper (cellulose) | | mass% | - | - | - | 15.0 | 30.0 | 30.0 |
| PET | | mass% | 0.2 | 0.2 | 0.3 | 0.2 | 0.1 | 0.2 |
| Al | | mass% | 0.5 | 0.5 | 0.9 | 1.4 | 2.3 | 2.5 |
| Monosaccharide | | | ○ | ○ | ○ | ○ | ○ | ○ |
| Cellulose fiber length | | | Δ | Δ | Δ | ○ | ○ | ○ |
| Cellulose fiber content (Cellulose effective mass ratio) | | mass% | 35.6 | 36.5 | 26.1 | 37.4 | 37.8 | 34.5 |
| Maximum diameter of resin particle | | | ○ | ○ | ○ | ○ | ○ | ○ |
| Aspect ratio of resin particle | | | ○ | ○ | ○ | ○ | ○ | ○ |
| Shape of resulting material (composite material) | | | ○ | ○ | ○ | ○ | ○ | ○ |
| Tensile strength | | | ○ | Δ | ○ | ○ | ○ | ○ |
| | MPa | | 22.50 | 11.36 | 28.83 | 34.13 | 38.40 | 41.89 |
| Flexural strength | | | ○ | Δ | ○ | ◎ | ◎ | ◎ |
| | MPa | | 29.05 | 14.17 | 34.17 | 42.64 | 41.42 | 48.54 |
| Flexural modulus | | | Δ | Δ | Δ | ◎ | ◎ | ◎ |
| | MPa | | 1601.7 | 1410.2 | 1554.6 | 2512.9 | 2883.0 | 2690.1 |
| Impact resistance | | | ○ | Δ | ○ | ○ | ○ | ○ |
| | kJ/m$^2$ | | 2.06 | 1.74 | 3.31 | 2.64 | 3.29 | 3.86 |
| MFR (230°C × 5.00 kg) | | g/10 min | 41.86 | 25.29 | 20.70 | 3.41 | 0.53 | 1.04 |
| Fonnability | | | ○ | ○ | ○ | ○ | ○ | ○ |
| Remarks: 'Ex.' means Example according to this invention. | | | | | | | | |

[Table 1-2]

Table 1 (continued)

| | | CEx. 1 | CEx. 2 | CEx. 3 | CEx. 4 |
|---|---|---|---|---|---|
| Used coffee capsule 1 | mass% | 100 | 57 | 100 | 100 |
| Modified PP resin 1 | mass% | - | 3 | - | - |
| Empty capsule 1 | mass% | - | - | - | - |

(continued)

| | | CEx. 1 | CEx. 2 | CEx. 3 | CEx. 4 |
|---|---|---|---|---|---|
| Broken paper 1 | mass% | - | 40 | - | - |
| Coffee residue | mass% | 70.2 | 40.0 | 70.2 | 70.2 |
| PP | mass% | 29.1 | 16.6 | 29.1 | 29.1 |
| LDPE | mass% | - | 7.2 | - | - |
| Modified PP resin 1 | mass% | - | 3.8 | - | - |
| Paper (cellulose) | mass% | - | 30.0 | - | - |
| PET | mass% | 0.2 | 0.1 | 0.2 | 0.2 |
| Al | mass% | 0.5 | 2.3 | 0.5 | 0.5 |
| Monosaccharide | | × | × | × | × |
| Cellulose fiber length | | Δ | ○ | Δ | Δ |
| Cellulose fiber content (Cellulose effective mass ratio) | mass% | 36.8 | 37.9 | 36.9 | 36.7 |
| Maximum diameter of resin particle | | ○ | ○ | ○ | ○ |
| Aspect ratio of resin particle | | ○ | ○ | ○ | ○ |
| Shape of resulting material (composite material) | | Δ | Δ | ○ | ○ |
| Tensile strength | | × | ○ | × | × |
| | MPa | 8.71 | 28.9 | 8.82 | 7.99 |
| Flexural strength | | × | ○ | × | × |
| | MPa | 9.22 | 29.4 | 9.31 | 8.85 |
| Flexural modulus | | × | ○ | × | × |
| | MPa | 1374 | 2425 | 1391 | 1256 |
| Impact resistance | | Δ | Δ | Δ | Δ |
| | kJ/m$^2$ | 1.47 | 1.72 | 1.44 | 1.41 |
| MFR (230°C × 5.00 kg) | g/10 min | 7.21 | 0.09 | 6.88 | 8.53 |
| Formability | | Δ | Δ | Δ | Δ |
| Remarks: 'CEx.' means Comparative Example. | | | | | |

The present invention has been described as related to the present embodiments. It is our intention that the invention not be limited by any of the details of the description unless otherwise specified, but rather be construed broadly within its spirit and scope as set out in the attached claims.

The present application claims priority on Patent Application No. 2020-024327 filed in Japan on February 17, 2020, which is herein incorporated by reference as a part of the present specification.

**Claims**

1. A resin composite material, comprising:

    a thermoplastic resin;
    a powder containing a polysaccharide, the powder being dispersed in the thermoplastic resin; and
    a monosaccharide.

2. The resin composite material according to claim 1, wherein the powder containing a polysaccharide contains an organic residue.

3. The resin composite material according to claim 1, wherein the powder containing a polysaccharide contains a coffee residue and/or a coffee powder.

4. The resin composite material according to any one of claims 1 to 3, wherein the thermoplastic resin contains a polyolefin resin.

5. The resin composite material according to claim 4, wherein the polyolefin resin contains an acid-modified polyolefin resin.

6. The resin composite material according to claim 4 or 5, comprising resin particles containing a resin different from the polyolefin resin,

   wherein a melting point of the resin different from the polyolefin resin is 10°C or more higher than a melting point of the polyolefin resin; and
   wherein a maximum diameter of the resin particles is 10 $\mu$m or more.

7. The resin composite material according to claim 6, wherein the resin particles contain polyethylene terephthalate.

8. The resin composite material according to any one of claims 1 to 7, comprising cellulose fibers having a fiber length of 0.3 mm or more.

9. The resin composite material according to any one of claims 1 to 8, which is used for a material or a constituent member for civil engineering, a building material, furniture, or an automobile.

10. A resin formed body, which is obtainable by using the resin composite material according to any one of claims 1 to 8.

11. The resin formed body according to claim 10, which is used as a material or a constituent member for civil engineering, a building material, furniture, or an automobile.

## INTERNATIONAL SEARCH REPORT

| International application No. |
| --- |
| PCT/JP2021/005741 |

### A. CLASSIFICATION OF SUBJECT MATTER

B29K 101/12(2006.01)n; B29K 105/12(2006.01)n; C08K 5/07(2006.01)i; C08K 5/1545(2006.01)i; C08L 1/02(2006.01)i; C08L 23/00(2006.01)i; C08L 67/02(2006.01)i; C08L 93/00(2006.01)i; C08L 101/00(2006.01)i; B29C 70/12(2006.01)i; B29C 70/28(2006.01)i
FI: C08L101/00; C08L93/00; C08L23/00; C08L1/02; C08L67/02; C08K5/07; C08K5/1545; B29C70/12; B29C70/28; B29K101:12; B29K105:12

According to International Patent Classification (IPC) or to both national classification and IPC

### B. FIELDS SEARCHED

Minimum documentation searched (classification system followed by classification symbols)
B29K101/12; B29K105/12; C08K5/07; C08K5/1545; C08L1/02; C08L23/00; C08L67/02; C08L93/00; C08L101/00; B29C70/12; B29C70/28

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2004-292805 A (NIPPON OIL & FATS CO., LTD., ITO EN, LIMITED) 21 October 2004 (2004-10-21) claim 1, paragraphs [0043]-[0046], table 4, examples 1-2 | 1-4, 8-11 |
| Y | claim 1, paragraphs [0043]-[0046], table 4, examples 1-2 | 5 |
| Y | JP 2004-181881 A (DAIKEN CORPORATION) 02 July 2004 (2004-07-02) claim 4, paragraphs [0011], [0027] | 5 |
| Y | JP 2001-032515 A (MATSUSHITA ELECTRIC WORKS, LTD.) 06 February 2001 (2001-02-06) claim 7, paragraph [0026] | 5 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 21 April 2021 (21.04.2021) | 11 May 2021 (11.05.2021) |

| Name and mailing address of the ISA/ <br> Japan Patent Office <br> 3-4-3, Kasumigaseki, Chiyoda-ku, <br> Tokyo 100-8915, Japan | Authorized officer <br><br> Telephone No. |
| --- | --- |

Form PCT/ISA/210 (second sheet) (January 2015)

## INTERNATIONAL SEARCH REPORT

| International application No. |
| --- |
| PCT/JP2021/005741 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2000-136579 A. (MATSUSHITA ELECTRIC WORKS, LTD.) 16 May 2000 (2000-05-16) claim 8, paragraphs [0014], [0038] | 5 |
| A | JP 2016-520343 A (UNILEVER NV.) 14 July 2016 (2016-07-14) paragraph [0034] | 1-11 |
| A | JP 2011-526535 A (NESTEC S.A.) 13 October 2011 (2011-10-13) claim 1 | 1-11 |
| A | JP 2011-505172 A (ILLYCAFFE' S.P.A.) 24 February 2011 (2011-02-24) paragraph [0019] | 1-11 |

Form PCT/ISA/210 (continuation of second sheet) (January 2015)

**INTERNATIONAL SEARCH REPORT**
Information on patent family members

International application No.

PCT/JP2021/005741

| Patent Documents referred in the Report | Publication Date | Patent Family | Publication Date |
|---|---|---|---|
| JP 2004-292805 A | 21 Oct. 2004 | (Family: none) | |
| JP 2004-181881 A | 02 Jul. 2004 | (Family: none) | |
| JP 2001-032515 A | 06 Feb. 2001 | (Family: none) | |
| JP 2000-136579 A | 16 May 2000 | KR 10-2000-0017472 A claim 7, p. 5, lines 9-10, p. 8, lines 6-9 CN 1249986 A claim 7, p. 3, lines 1-3, p. 6, line 21 to p. 7, line 2 | |
| JP 2016-520343 A | 14 Jul. 2016 | US 2015/0173558 A1 paragraph [0068] WO 2014/146952 A1 p. 12, line 29 to p. 13, line 3 EP 2781174 A1 paragraph [0037] CN 105050458 A paragraph [0066] | |
| JP 2011-526535 A | 13 Oct. 2011 | US 2011/0139847 A1 claim 1 WO 2009/153298 A1 claim 1 CN 102066203 A claim 1 | |
| JP 2011-505172 A | 24 Feb. 2011 | US 2010/0313766 A1 paragraph [0017] WO 2009/053811 A2 p. 4, lines 22-25 CN 101888801 A paragraph [0020] | |

Form PCT/ISA/210 (patent family annex) (January 2015)

**REFERENCES CITED IN THE DESCRIPTION**

**Patent documents cited in the description**

- JP 2010173169 A

- JP 2020024327 A